# EUROPEAN PATENT APPLICATION

(11) **EP 4 432 433 A1**
(43) Date of publication of application: **18.09.2024**
(21) Application number: 22892530.1
(22) Date of filing: 20.10.2022
(51) Int. Cl.: H01M 50/184, H01M 50/107, H01M 50/14, H01M 50/152, H01M 50/186, H01M 50/474, H01M 50/477

(54) **CYLINDRICAL BATTERY**

(30) Priority: 11.11.2021 JP 2021184257
(71) Applicant: Panasonic Energy Co., Ltd., Osaka 570-8511 (JP); Panasonic Holdings Corporation, Osaka 571-8501 (JP)
(72) Inventor: OKUTANI, Oose, Osaka 571-0057 (JP); GESHI, Shinya, Osaka 571-0057 (JP); HARAGUCHI, Shin, Osaka 571-0057 (JP); FATIN FARHANAH, Binti Haridan, Osaka 571-0057 (JP)
(74) Representative: Eisenführ Speiser
(86) International application number: PCT/JP2022/039044
(87) International publication number: WO 2023/085030

(57) **Abstract**

A gasket (28) has: an annular part (31) that abuts the bottom surface of a sealing body (17); a bottom part (32) that is positioned closer than the annular part (31) to an electrode body (14) and that presses the electrode body (14); and a coupling part (33) that couples the annular part (31) and the bottom part (32) and that inclines towards the center in the radial direction with proximity to the bottom part (32). The bottom part (32) is provided with a first through hole (41) that is positioned so as to include the center in the radial direction, and a plurality of second through holes (42) that are positioned at a peripheral part.

## Description

### TECHNICAL FIELD

The present disclosure generally relates to a cylindrical battery.

### BACKGROUND ART

A cylindrical battery is generally required to have resistance to vibration and shock, and particularly in the case where a cylindrical battery is mounted on a vehicle, the cylindrical battery may be required to meet severe requirements for resistance to vibration and shock. PATENT LITERATURE 1 discloses a cylindrical battery in which an annular bottom portion extending in a radial direction in a gasket is brought into contact with an electrode assembly. In this cylindrical battery, when the annular bottom portion appropriately presses on the electrode assembly in an axial direction, the electrode assembly is restrained in the axial direction by the gasket, which makes it difficult to move the electrode assembly in the axial direction. Therefore, this can easily increase the resistance to vibration and shock.

### CITATION LIST

### PATENT LITERATURE

PATENT LITERATURE 1: Japanese Utility Model Application Publication No. Hei02-049064

### SUMMARY

In the above-described cylindrical battery, the electrode assembly is pressed by the annular bottom portion of the gasket extending in the radial direction. Accordingly, since a force received by the electrode assembly from the bottom portion greatly changes depending on an axial position of the annular bottom portion, it becomes necessary to perform highly accurate positioning of the annular bottom portion in the axial direction. However, since it is difficult to perform highly accurate positioning of the annular bottom portion in the axial direction, and in addition, dimensional variation of the electrode assembly or the like occurs, it is difficult to press the gasket on the electrode assembly with an appropriate force.

It is an advantage of the present disclosure to provide a cylindrical battery which enables an electrode assembly to be easily pressed in an axial direction by a gasket with an appropriate force and is excellent in resistance to vibration and shock.

In order to solve the above-described problem, a cylindrical battery according to the present disclosure comprises an electrode assembly in which a positive electrode and a negative electrode are wound with a separator interposed between the positive electrode and the negative electrode, a bottomed cylindrical exterior housing can that houses the electrode assembly, a sealing assembly with which an opening of the exterior housing can is capped, and a gasket that insulates the sealing assembly from the exterior housing can, wherein the gasket has an annular portion that contacts a bottom surface of the sealing assembly, a bottom portion that is located on a side closer to the electrode assembly than the annular portion and presses on the electrode assembly, and a connecting portion that connects between the annular portion and the bottom portion and is inclined toward a radial center while approaching the bottom portion, and the bottom portion has a first through hole that is located to include the radial center and a plurality of second through holes that are located on an outer circumferential portion.

In the cylindrical battery according to the present disclosure, an electrode assembly can be easily pressed in an axial direction by a gasket with an appropriate force, and the resistance of the cylindrical battery to vibration and shock can be improved.

### BRIEF DESCRIPTION OF DRAWING

FIG. 1 is an axial sectional view of a cylindrical battery according to an embodiment of the present disclosure.
FIG. 2 is a perspective view of an electrode assembly of the cylindrical battery.
FIG. 3 is a plan view of a gasket before caulking when seen from an upper side in an axial direction.
FIG. 4 is a plan view of the gasket before caulking when seen from a lower side in the axial direction.
FIG. 5 is a perspective view illustrating the gasket before caulking so that a cut surface is seen.
FIG. 6 is an axial semi-sectional view of the gasket before caulking.
FIG. 7 is a sectional view explaining deformation of the gasket when caulking is performed.
FIG. 8 is a sectional view explaining deformation of the gasket when caulking is performed.
FIG. 9 is a sectional view explaining deformation of the gasket when caulking is performed.

### DESCRIPTION OF EMBODIMENTS

Hereinafter, an embodiment of a cylindrical battery according to the present disclosure will be described in detail with reference to the drawings. The cylindrical battery of the present disclosure may be a primary battery, or may be a secondary battery. Additionally, the cylindrical battery may be a battery using an aqueous electrolyte, or may be a battery using a non-aqueous electrolyte. In the following, a non-aqueous electrolyte secondary battery (lithium ion battery) using a non-aqueous electrolyte will be exemplified as a cylindrical battery 10 of an embodiment, but the cylindrical battery of the present disclosure is not limited to this.

It is assumed from the beginning that a new embodiment is constructed by appropriately combining feature portions of embodiments and modifications which are described below. In the following embodiments, the same components are denoted by the same reference numerals in the drawings, and duplicate descriptions are omitted. Schematic diagrams are included in a plurality of the drawings, and the dimensional ratios such as lengths, widths and heights of each member between different drawings are not necessarily the same. In this specification, a sealing assembly 17 side in an axial direction (height direction) of a cylindrical battery 10 is defined as "upper", and a bottom portion 68 side of an exterior housing can 16 in the axial direction is defined as "lower". Additionally, of the components described below, components that are not described in the independent claim indicating the highest level concept are arbitrary components, and are not essential components.

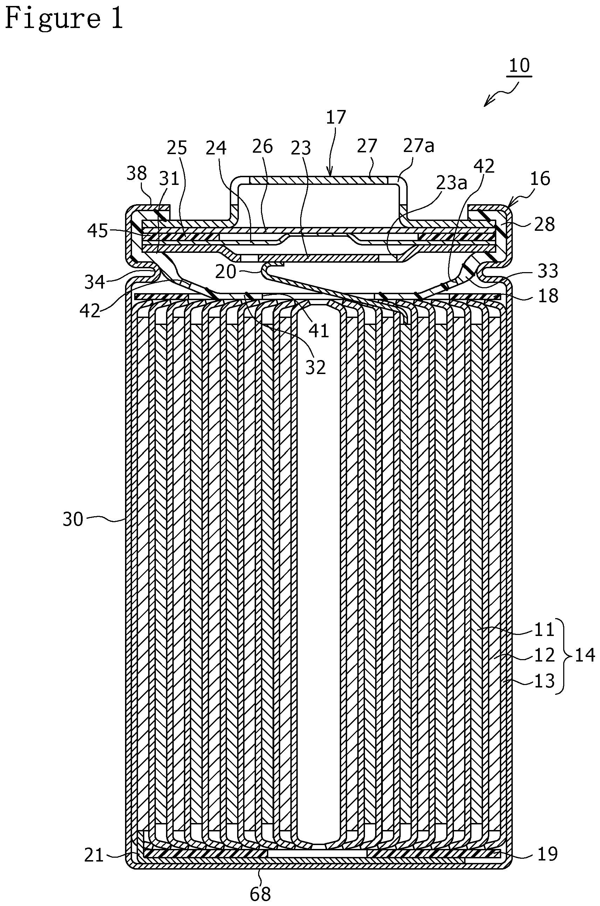

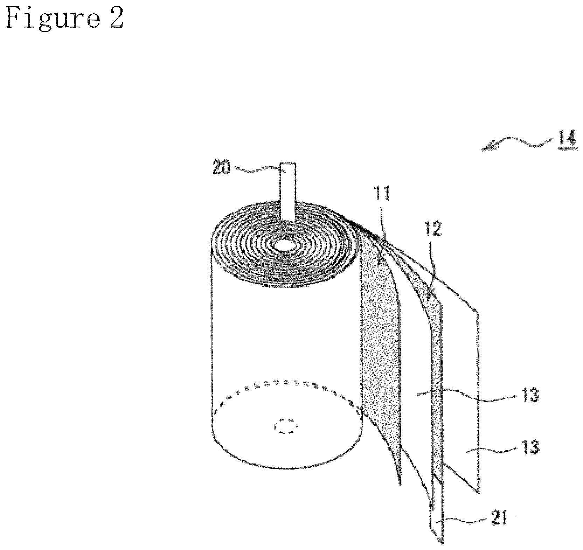

FIG. 1 is an axial sectional view of the cylindrical battery 10 according to an embodiment of the present disclosure, and FIG. 2 is a perspective view of an electrode assembly 14 of the cylindrical battery 10. As illustrated in FIG. 1, the cylindrical battery 10 comprises a wound-type electrode assembly 14, a non-aqueous electrolyte (not illustrated), and a bottomed cylindrical metal exterior housing can 16 that houses the electrode assembly 14 and the non-aqueous electrolyte, and a sealing assembly 17 with which an opening of the exterior housing can 16 is capped. As illustrated in FIG. 2, the electrode assembly 14 has a wound structure in which an elongated positive electrode 11 and an elongated negative electrode 12 are wound with two elongated separators 13 each interposed between the positive electrode 11 and the negative electrode 12.

The negative electrode 12 is formed to be one size larger than the positive electrode 11 in order to prevent precipitation of lithium. That is, the negative electrode 12 is formed to be longer in the longitudinal direction and the width direction (short direction) than the positive electrode 11. The two separators 13 are each formed to be at least one size larger than the positive electrode 11, and are disposed so as to interpose, for example, the positive electrode 11 therebetween. The negative electrode 12 may include a winding start end of the electrode assembly 14. However, the separator 13 generally extends beyond a winding start side end of the negative electrode 12, and a winding start side end of the separator 13 serves as the winding start end of the electrode assembly 14.

The non-aqueous electrolyte includes a non-aqueous solvent, and an electrolyte salt dissolved in the non-aqueous solvent. Examples of the non-aqueous solvent may include esters, ethers, nitriles, amides, and mixed solvents containing two or more selected from the foregoing. The non-aqueous solvent may contain a halogen-substituted product obtained by substituting at least some of hydrogen atoms in these solvents with a halogen atom such as fluorine. Note that the non-aqueous electrolyte is not limited to a liquid electrolyte and may be a solid electrolyte that uses a gel polymer or the like. As the electrolyte salt, a lithium salt such as LiPF₆ is used.

The positive electrode 11 has a positive electrode current collector and a positive electrode mixture layer formed on each surface of the positive electrode current collector. Examples of the positive electrode current collector may include a foil of metal such as aluminum or an aluminum alloy, which is stable within a potential range of the positive electrode 11, and a film in which such a metal is disposed on a surface layer thereof. The positive electrode mixture layer includes a positive electrode active material, a conductive agent, and a binder. The positive electrode 11 can be produced by, for example, applying a positive electrode mixture slurry including a positive electrode active material, a conductive agent, a binder, and the like on a positive electrode current collector, drying the resulting coating film, and then compressing the coating film to form a positive electrode mixture layer on each surface of the current collector.

The positive electrode active material is composed of a lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. An example of a preferable lithium-containing metal composite oxide is a composite oxide containing at least one of Ni, Co, Mn and Al.

Examples of the conductive agent included in the positive electrode mixture layer may include carbon materials such as carbon black, acetylene black, Ketjen black, and graphite. Examples of the binder included in the positive electrode mixture layer may include fluorocarbon resins such as polytetrafluoroethylene (PTFE) and polyvinylidene fluoride (PVdF), polyacrylonitrile (PAN), polyimide resins, acrylic resins, and polyolefin resins. These resins may be used in combination with cellulose derivatives such as carboxymethyl cellulose (CMC) or a salt thereof, a polyethylene oxide (PEO), or the like.

The negative electrode 12 has a negative electrode current collector and a negative electrode mixture layer formed on each surface of the negative electrode current collector. Examples of the negative electrode current collector may include a foil of a metal such as copper or a copper alloy, which is stable within a potential range of the negative electrode 12, and a film in which such a metal is disposed on a surface layer thereof. The negative electrode mixture layer includes a negative electrode active material, and a binder. The negative electrode 12 can be produced by, for example, applying a negative electrode mixture slurry including a negative electrode active material, a binder, and the like on a negative electrode current collector, drying the resulting coating film, and then compressing the coating film to form a negative electrode mixture layer on each surface of the current collector.

As the negative electrode active material, a carbon material that reversibly occludes and releases lithium ions is generally used. A preferable carbon material is graphite including natural graphite such as flaky graphite, massive graphite, and earthy graphite, and artificial graphite such as massive artificial graphite and graphitized mesophase carbon microbeads. As the negative electrode active material, a silicon (Si) material containing Si may be included in the negative electrode mixture layer. As the negative electrode active material, a metal alloyed with lithium other than Si, an alloy containing such a metal, a compound containing such a metal, and the like may be used.

As the binder included in the negative electrode mixture layer, fluorocarbon resins, PAN, polyimide resins, acrylic resins, polyolefin resins, and the like may be used as in the case of the positive electrode 11, and a styrene-butadiene rubber (SBR) or a modification thereof is preferably used. In the negative electrode mixture layer, for example, in addition to SBR and the like, CMC or a salt thereof, polyacrylic acid (PAA) or a salt thereof, polyvinyl alcohol, or the like may be included.

A porous sheet having ion permeability and an insulation property is used as the separator 13. Specific examples of the porous sheet include a microporous thin film, a woven fabric, and a nonwoven fabric. The material of the separator 13 is preferably a polyolefin resin such as polyethylene or polypropylene, or a cellulose. The separator 13 may be either a single layer structure or a laminated structure. A heat-resistant layer or the like may be formed on a surface of the separator 13.

As illustrated in FIG. 1, a positive electrode lead 20 is bonded to the positive electrode 11, and a negative electrode lead 21 is bonded on a winding finish-side in the longitudinal direction of the negative electrode 12. The cylindrical battery 10 has an upper insulating plate 18 above the electrode assembly 14, and has a lower insulating plate 19 below the electrode assembly 14. The positive electrode lead 20 extends toward the sealing assembly 17 through a through hole of the upper insulating plate 18, and the negative electrode lead 21 extends toward a bottom portion 68 of the exterior housing can 16 through the outside of the lower insulating plate 19. The positive electrode lead 20 is connected to a lower surface of a bottom plate 23 of the sealing assembly 17, by means of welding or the like. A terminal cap 27 constituting a top plate of the sealing assembly 17 is electrically connected to the bottom plate 23, and serves as a positive electrode terminal. The negative electrode lead 21 is connected to an inner surface of the bottom portion 68 of the metal exterior housing can 16 by means of welding or the like, and the exterior housing can 16 serves as a negative electrode terminal.

In the example illustrated in FIGS. 1 and 2, the positive electrode lead 20 is electrically connected to an intermediate portion such as a center portion in the winding direction of the positive electrode current collector, and the negative electrode lead 21 is electrically connected to a winding finish-side end in the winding direction of the negative electrode current collector. However, the negative electrode lead may be electrically connected to a winding start-side end in the winding direction of the negative electrode current collector. Alternatively, the electrode assembly may have two negative electrode leads in which one of the negative electrode leads is electrically connected to the winding start side-end in the winding direction of the negative electrode current collector, and the other negative electrode lead is electrically connected to the winding finish-side end in the winding direction of the negative electrode current collector. Alternatively, the winding finish-side end in the winding direction of the negative electrode current collector may be brought into contact with an inner surface of the exterior housing can so that the negative electrode and the exterior housing can are electrically connected to each other.

The cylindrical battery 10 further comprises a resin gasket 28 disposed between the exterior housing can 16 and the sealing assembly 17. The sealing assembly 17 is fixed by caulking to the opening of the exterior housing can 16 with the gasket 28 interposed therebetween. In this way, an internal space of the cylindrical battery 10 is closed. The gasket 28 is held between the exterior housing can 16 and the sealing assembly 17, and insulates the sealing assembly 17 from the exterior housing can 16. The gasket 28 has a role of a seal material for maintaining the airtightness of the inside of the battery, and a role as an insulating material for insulating the sealing assembly 17 from the exterior housing can 16.

The exterior housing can 16 houses the electrode assembly 14 and the non-aqueous electrolyte, and has a shoulder 38, a grooved portion 34, a cylindrical portion 30, and a bottom portion 68. The grooved portion 34 can be formed by, for example, annularly recessing the one part of the side wall of the exterior housing can 16 toward the radially inward side by a radially inward spinning process. The shoulder 38 is formed by bending an upper end of the exterior housing can 16 to the inner side toward a circumferential edge 45 of the sealing assembly 17 when the sealing assembly 17 is fixed by caulking to the exterior housing can 16. The sealing assembly 17 is fixed by caulking to the exterior housing can 16 with the gasket 28 interposed between the shoulder 38 and the grooved portion 34.

The gasket 28 is made of materials having elasticity and electrolyte resistance, which, for example, include polyolefin-based resins such as polyethylene (PE) and polypropylene (PP), or fluorine-based resins such as polytetrafluoroethylene (PTFE) and perfluoroalkoxy alkanes (PFA). The gasket 28 has an annular portion 31 that contacts a bottom surface of the sealing assembly 17, a bottom portion 32 that presses on the electrode assembly 14, and a connecting portion 33 that connects between the annular portion 31 and the bottom portion 32. The bottom portion 32 is located on a side closer to the electrode assembly 14 than the annular portion 31, and has a first through hole 41 that is located to include the radial center and a plurality of second through holes 42 that are located on an outer circumferential portion. The plurality of second through holes 42 are arranged along a circumferential direction. The connecting portion 33 is inclined toward a center in the radial direction while approaching the bottom portion 32.

The electrode assembly 14 is directly pressed downward in the axial direction by the gasket 28, thereby suppressing axial movement thereof. A shape of the upper insulating plate 18 may be changed so that the gasket 28 presses on the electrode assembly 14 via the upper insulating plate 18. The bottom portion 32 is connected to a lower end of the connecting portion 33 that is inclined downward in the axial direction toward a radial center side. Accordingly, the electrode assembly 14 is prevented from receiving excessive pressure from the bottom portion 32 by the elasticity of the connecting portion 33 inclined toward the axial direction. Therefore, the electrode assembly 14 can be easily pressed in the axial direction by the gasket 28 with an appropriate force and the resistance of the cylindrical battery 10 to vibration and shock can be improved.

Since the first through hole 41 is provided at a radial center of the gasket 28, the degree of freedom of radial inward displacement of the bottom portion 32 can be increased, and as compared with the case where the first through hole 41 is not provided, the electrode assembly 14 can be easily pressed in the axial direction by the gasket 28 with an appropriate force and in addition, the bottom portion 32 can be prevented from being displaced to become wavy, and the electrode assembly 14 can be efficiently pressed downward.

The plurality of second through holes 42 are provided on the outer circumferential portion of the bottom portion of the gasket 28. The plurality of second through holes 42 are thus provided at a position adjacent to the connecting portion 33, whereby the electrode assembly 14 can be easily pressed in the axial direction by the gasket 28 with an appropriate force.

Furthermore, as illustrated in FIG. 1, the outer circumferential portion of the bottom portion 32 is preferably inclined toward the electrode assembly 14 while approaching the radial center. This can increase the degree of freedom of axial displacement of a portion of the bottom portion 32 by which the electrode assembly 14 is pressed, and therefore, the electrode assembly 14 can be more easily pressed downward with an appropriate force. The outer circumferential portion of the bottom portion 32 may be curved toward the electrode assembly 14 while approaching the radial center.

Furthermore, the thickness of the connecting portion 33 is preferably larger than the thickness of the bottom portion 32, and the inclination angle of the connecting portion 33 with respect to the radial direction is preferably larger than the inclination angle of the outer circumferential portion of the bottom portion 32.

The sealing assembly 17 has a stacked structure of the bottom plate 23, a lower vent member 24, an insulating member 25, an upper vent member 26, and the terminal cap 27 in this order from the electrode assembly 14 side. Each member constituting the sealing assembly 17 has, for example, a disk shape or a ring shape, and each member except for the insulating member 25 is electrically connected to each other. The bottom plate 23 has at least one through hole 23a. The lower vent member 24 and the upper vent member 26 are connected to each other at respective centers thereof, and the insulating member 25 is interposed between the circumferential edges of the vent members 24 and 26.

If abnormal heat generation occurs in the cylindrical battery 10 and the internal pressure of the cylindrical battery 10 increases, the lower vent member 24 is deformed so as to push the upper vent member 26 upward to the terminal cap 27 side to break, resulting in cutting off of a current path between the lower vent member 24 and the upper vent member 26. If the internal pressure further increases, the upper vent member 26 breaks, and gas is discharged from a through hole 27a in the terminal cap 27. This gas discharge can prevent the cylindrical battery 10 from rupturing due to an excessive increase in internal pressure of the cylindrical battery 10, which makes it possible to improve the safety of the cylindrical battery 10.

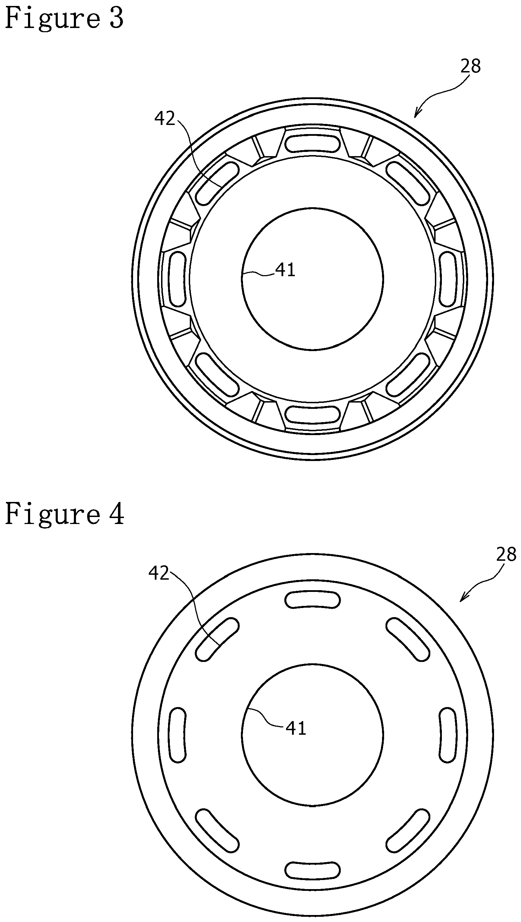

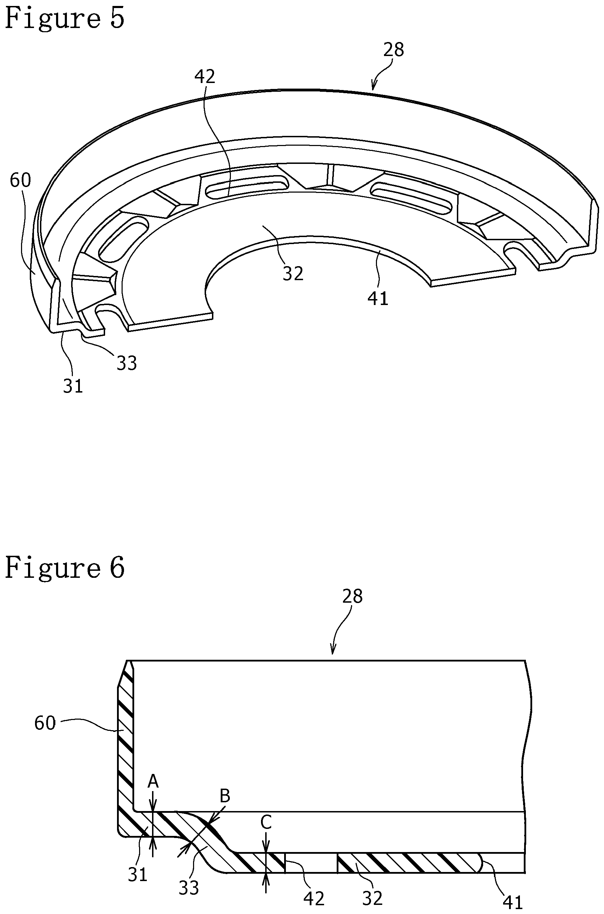

FIG. 3 is a plan view of a single gasket 28 before caulking when seen from an upper side in the axial direction, and FIG. 4 is a plan view of the gasket 28 before caulking when seen from a lower side in the axial direction. FIG. 5 is a perspective view illustrating the gasket 28 before caulking so that a cut surface is seen, and FIG. 6 is an axial semi-sectional view of the gasket 28 before caulking.

As illustrated in FIGS. 3 and 4, in the present embodiment, each of the first through hole 41 and the plurality of second through holes 42 has the following shape and structure. Specifically, the first through hole 41 is required to be located to include a radial center, but is preferably located at the radial center and has an approximately circular plan shape. The plurality of second through holes 42 are arranged at approximately regular intervals in the circumferential direction on the outer circumferential portion of the bottom portion 32, and each second through hole 42 is an elongated hole extending along the circumferential direction. An opening area of the first through hole 41 is not limited to a particular value, but for example, is preferably greater than or equal to 10% and less than or equal to 35%, and more preferably greater than or equal to 15% and less than or equal to 25% of an area of an inner diameter portion of the cylindrical portion 30 (see FIG. 1). When the opening area is smaller than 15%, the bottom portion 32 may become wavy, or conversely, when the opening area is larger than 35%, the bottom portion 32 is reduced in area, which may make it difficult to surely press the bottom portion 32 on the electrode assembly 14.

The opening area of the first through hole is larger than total area of openings of all the second through holes 42. However, the opening area of the first through hole 41 may be smaller than the total area of the openings of all the second through holes 42, and furthermore, the opening area of the first through hole 41 may be smaller than the opening area of the second through hole 42. More specifically, the total area of openings of all the second through holes 42 is, for example, preferably greater than or equal to 5% and less than or equal to 30%, and more preferably greater than or equal to 10% or less than or equal to 20% of the opening area of the first through hole 41. When the total area is smaller than 5% of the opening area of the first through hole 41, it becomes difficult to adjust a pressing force of the bottom portion 32 on the electrode assembly 14, or conversely, when the total area is larger than 30% of the opening area of the first through hole 41, the rigidity of the bottom portion 32 is reduced, which makes it difficult to surely press the bottom portion 32 on the electrode assembly 14.

As illustrated in FIG. 5, the gasket 28 before caulking has a cylindrical portion 60, and the annular portion 31 extends approximately in parallel to the radial direction from a lower end of the cylindrical portion 60. The connecting portion 33 is inclined inward in the radial direction and downward in the axial direction from an end on the radially inward side of the annular portion 31 toward the axial direction, and the annular bottom portion 32 extends approximately in parallel to the radial direction from the lower end of the connecting portion 33. The thickness of each of the annular portion 31, the connecting portion 33, and the bottom portion 32 is not limited to a particular value. However, as described above, in order to press the bottom portion 32 on the electrode assembly 14 with an appropriate force, as illustrated in FIG. 6, the thickness of the annular portion 31 as indicated by an arrow A is preferably larger than the thickness of the connecting portion 33 as indicated by an arrow B, and the thickness of the connecting portion 33 is preferably larger than the thickness of the bottom portion 32 as indicated by an arrow C. For example, if the thickness of the bottom portion 32 is greater than or equal to 70% and less than or equal to 90% of the thickness of the connecting portion 33, it becomes easy to adjust the pressing force of the bottom portion 32 on the electrode assembly 14 within an appropriate range.

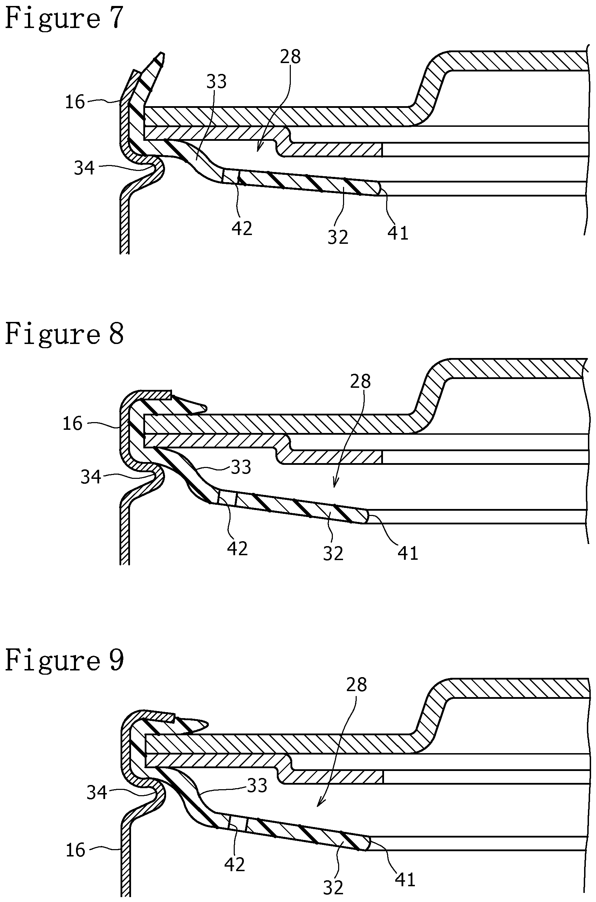

FIGS. 7 to 9 each are a sectional view explaining deformation of the gasket 28 when caulking is performed. Note that a sealing assembly illustrated in each of FIGS. 7 to 9 includes a terminal cap and a bottom plate. As illustrated in FIG. 7, when the end on the opening side of the exterior housing can 16 is bent inward in the radial direction by caulking, the connecting portion 33 is deformed downward by a downward force with the upper side of the grooved portion 34 as a fulcrum, and as a result, the bottom portion 32 extending in the radial direction before caulking is deformed to expand to the inside of the battery. At this time, an inclined portion is formed on the outer circumferential portion of the bottom portion 32. When caulking further advances, the inclination angle of the outer circumferential portion of the bottom portion 32 increases as illustrated in FIGS. 8 and 9. This can achieve the structure of the gasket 28 after caulking as illustrated in FIG. 1. Before caulking, a gasket having the structure of the gasket 28 after caulking as illustrated in FIG. 1 may be used.

### <EXAMPLES>

### [Production of Positive Electrode]

As a positive electrode active material, LiNi_{0.8}Co_{0.15}Al_{0.05}O₂ was used. 100 parts by weight of the positive electrode active material, 1.7 parts by weight of poly(vinylidene fluoride) as a binder and 2.5 parts by weight of acetylene black as a conductive agent were mixed to a liquid component to prepare a positive electrode mixture paste. The positive electrode mixture paste was applied to each surface of the positive electrode current collector made of aluminum foil, except for a connection portion of a positive electrode lead, and was dried and then rolled into a predetermined thickness to obtain a positive electrode. The obtained positive electrode was cut into a predetermined size, and the positive electrode lead made of Al was connected to an exposed portion of the current collector by ultrasonic welding.

### [Production of Negative Electrode]

As a negative electrode active material, graphitizable carbon was used. 100 parts by weight of the negative electrode active material, 0.6 parts by weight of poly(vinylidene fluoride) as a binder, 1 part by weight of carboxymethylcellulose as a thickener, and a proper amount of water were stirred by a double-arm kneader to obtain a negative electrode paste. The obtained negative electrode mixture paste was applied to each surface of the negative electrode current collector made of copper foil, except for a connection portion of a negative electrode lead, and was dried and then rolled into a predetermined thickness to obtain a negative electrode. The negative electrode plate was cut into a predetermined size, and the negative electrode lead made of Ni-Cu-Ni cladding material was connected to an exposed portion of the current collector by ultrasonic welding.

### [Preparation of Non-Aqueous Electrolytic Solution]

In a mixed solvent in which ethylene carbonate (EC), diethyl carbonate (DEC), and ethyl methyl carbonate (EMC) were mixed, lithium hexafluorophosphate (LiPF₆) as an electrolyte was dissolved at 1.0 mol/L to prepare a non-aqueous electrolytic solution.

### [Production of Sealing Assembly]

A thin thickness portion was provided in a circular terminal plate using an aluminum material as a vent member, and a thinnest thickness portion was further formed at a center. Then, a predetermined rupture disc and an insulating plate were connected to produce a sealing assembly.

### [Production of Cylindrical Battery]

The above-described positive electrode and negative electrode were spirally wound with a polyolefin-based resin as the separator interposed therebetween, thereby producing an electrode assembly. The electrode assembly was inserted into the exterior housing can produced by drawing a steel plate, and the negative electrode lead was welded to a bottom surface of the exterior housing can and the positive electrode lead was welded to the sealing assembly. Subsequently, the above-described spinning was performed on the exterior housing can, and then the exterior housing can was filled with the non-aqueous electrolytic solution. Then, the gasket explained using FIGS. 3 to 6 was disposed between the exterior housing can and the sealing assembly, and the caulking explained using FIGS. 7 to 9 was performed in a state in which the electrode assembly was housed in the exterior housing can. Thus, the cylindrical battery illustrated in FIG. 1 was produced.

### <Modified Example>

The present disclosure is not limited to the above embodiment and modified examples thereof, and various improvements and changes are possible within the matters described in the claims of the present application and the scope of equivalence of claims. For example, in the above-described embodiment, a case has been described where the bottom portion 32 of the gasket 28 is brought directly into contact with the electrode assembly 14 to directly press the bottom portion 32 on the electrode assembly 14. However, the bottom portion 32 of the gasket 28 may be brought into contact with the upper insulating plate 18 to press the upper insulating plate 18 downward. The electrode assembly 14 may be pressed downward by the upper insulating plate 18 that has been moved downward by being pressed downward. In this way, even when the electrode assembly 14 is indirectly pressed downward by the gasket 28 via the upper insulating plate 18, the electrode assembly 14 can be easily pressed in the axial direction with an appropriate force, and the resistance of the electrode assembly 14 to vibration and shock can be easily and securely improved.

### REFERENCE SIGNS LIST

10 Cylindrical battery, 11 Positive electrode, 12 Negative electrode, 13 Separator, 14 Electrode assembly, 16 Exterior housing can, 17 Sealing assembly, 18 Upper insulating plate, 19 Lower insulating plate, 20 Positive electrode lead, 21 Negative electrode lead, 23 Bottom plate, 23a Through hole, 24 Lower vent member, 25 Insulating member, 26 Upper vent member, 27 Terminal cap, 27a Through hole, 28 Gasket, 30 Cylindrical portion, 31 Annular portion, 32 Bottom portion, 33 Connecting portion, 34 Grooved portion, 38 Shoulder, 41 First through hole, 42 Second through hole, 45 Circumferential edge, 60 Cylindrical portion, 68 Bottom portion

## Claims

1. A cylindrical battery, comprising:
an electrode assembly in which a positive electrode and a negative electrode are wound with a separator interposed between the positive electrode and the negative electrode;
a bottomed cylindrical exterior housing can that houses the electrode assembly;
a sealing assembly with which an opening of the exterior housing can is capped; and
a gasket that insulates the sealing assembly from the exterior housing can,
wherein the gasket has an annular portion that contacts a bottom surface of the sealing assembly, a bottom portion that is located on a side closer to the electrode assembly than the annular portion and presses on the electrode assembly, and a connecting portion that connects between the annular portion and the bottom portion and is inclined toward a radial center while approaching the bottom portion, and
the bottom portion has a first through hole that is located to include the radial center and a plurality of second through holes that are located on an outer circumferential portion.

2. The cylindrical battery according to claim 1, wherein
at least an outer circumferential portion of the bottom portion is inclined toward the electrode assembly while approaching the radial center.

3. The cylindrical battery according to claim 1, wherein
at least an outer circumferential portion of the bottom portion is curved toward the electrode assembly while approaching the radial center.

4. The cylindrical battery according to any one of claims 1 to 3, wherein
the bottom portion presses directly on the electrode assembly.

5. The cylindrical battery according to any one of claims 1 to 4, wherein
a thickness of the connecting portion is larger than a thickness of the bottom portion.

6. The cylindrical battery according to any one of claims 1 to 5, wherein
an opening area of the first through hole is larger than a total area of openings of the plurality of second through holes.
